# EUROPEAN PATENT APPLICATION

(11) **EP 1 847 941 A2**
(43) Date of publication of application: **24.10.2007**
(21) Application number: 07251625.5
(22) Date of filing: 18.04.2007
(51) Int. Cl.: G06F 21/20

(54) **Method and system afor resetting passwords**

(30) Priority: 19.04.2006 US 407722
(71) Applicant: AVAYA TECHNOLOGY LLC, Basking Ridge, NJ 07920 (US)
(72) Inventor: Fazal, Lookman, Franklin Park New Jersey 08823 (US); O'Gorman Lawrence, Madison New Jersey 07940 (US)
(74) Representative: Williams, David John

(57) **Abstract**

A method and system for resetting passwords in which an authenticated user who requests a new password is substantially immediately provided with one portion of the reset password while a second portion of the password is sent to a location to which the legitimate user for which the password is provided has access, such as a voice mailbox.

## Description

### BACKGROUND OF THE INVENTION

### 1. Field of the Invention

This invention is directed to the field of security systems, and, more particularly, to security systems for resetting computer passwords remotely and securely.

### 2. Description of the Related Art

Security is an increasing concern in this computer age. As information and technology proliferate, individuals and organizations have a greater need for security systems, and more passwords to keep track of. A user may have passwords for his home computer, office computer, laptop computer, e-mail programs, spreadsheet programs and so forth. Each computer, program and database usually has a different password, often with different characteristics (how many characters, is the password required to have a mix of letters and numbers and other characters, is the password case-sensitive, *etc.*). Moreover, many security programs require passwords to be changed periodically (*e.g.*, every 6 months, *etc.*). Managing passwords has therefore become a time-consuming and intricate task for many. This has the unfortunate consequence of lost or forgotten passwords, which means that users may be locked out of their computers, or locked out of certain programs, simply because there are just too many passwords to remember.

It is customary, therefore, for most large computer management organizations, such as corporations, to establish a system for resetting lost passwords, to ameliorate the inconveniences and lost productivity associated with lost passwords. Some of these systems are quite elaborate, since the system for resetting passwords can be no less secure that the remainder of the system, lest it be easier for an unauthorized user to reset a password than it is to hack the password itself. Other systems can be inconvenient.

Traditionally, most security systems are classified into one of three types: "Who you are", "What you know" and "What you have".

In a "Who you are" system, identity is established through some physical parameter of the individual, such as a fingerprint, retinal scan or voice match. These systems have the advantage of being difficult to "spoof", but can be expensive to set up and maintain. Most biometric recognition systems require an investment in equipment to perform the biometric testing, such as retinal scanners or fingerprint readers, and the equipment may not be available at every station where a user may need to seek access, especially in the case of resetting a lost password.

In a "What you know" system, identity is established through interrogation of the user with answers to personal questions (date of birth, mother's maiden name, Social Security number, *etc.*) or through pre-established non-personal information, such as a password. These systems are fairly common, and have the benefit of ease of use, but also suffer from the drawback that an unauthorized user may learn the information needed to answer the interrogator's questions from sources such as the internet (mother's maiden name, place of birth), by casual conversation with the authorized user (favorite sports team, name of pet) or by more sinister means (eavesdropping on the user when being interrogated).

In a "What you have" system, identity is established by the possession of an object, such as a key card, encrypted floppy disk or the like, or via enabling access to a secure location to which only the authorized user has access. These systems can be secure so long as the user maintains possession of the required object, but have the drawback that it is possible to lose physical objects that may be required, such as key cards.

Thus, these traditional systems all have their strengths and their flaws when taken individually.

Nonetheless, nearly all security systems employ one or more of these types of security features to provide security to a system and the devices employed in that system. Most such systems provide one or more of these features to their lost password recovery/reset protocols.

For example, in one existing system for resetting lost passwords, a user with a lost password calls in to a central security telephone number, and asks to reset the lost password. The central security office, either through a live operator, a voice response system or keypad entry in response to questions posed over the phone, authenticates the identity of the user and issues the user a new password on the spot. In one such automatic system described in United States Patent No. 5,991,882, the authentication steps may involve requiring the user to answer certain questions, the correct answers to which are stored with the security operator (perhaps in an automated response system as described in the '882 patent).

Another system for verifying a user's identity is described in still-pending commonly assigned United States Patent Application Ser. No. 10/626,482, filed July 23, 2003. In that system, the questioning is drawn from a list of prior questions and answers established by the user, and the system utilizes only some of the available questions and answers at any given time, so that an unauthorized user attempting to gain access through the system would have no way of knowing which questions would be used at any given time.

Systems which require answers to one or more questions to authenticate the user's identity have certain drawbacks. For example, depending on the questions asked, an unauthorized user may have access to the information necessary to answer the questions and thereby receive the reset password, compromising the system's security. In one system, described in United States Patent No. 5,425,102, the system automatically provides hints to the user to prompt the user to recall the actual password, but at the same time could be used by an unauthorized user to divine the password, defeating completely the security system.

One known voiceprint matching system is described in United States Patent No. 5,913,192. Known voiceprint matching systems have false reject rates, on the order of 1-10% false negatives, so many legitimate users cannot use them to authenticate their identity and reset the password simply.

In an alternative system, after the person calling in is authenticated, the password is not given directly to that person, but is routed to a supervisor who then delivers the reset password personally to the requesting user. This system has the additional security level of requiring an additional authentication to be performed by a person knowing the actual user personally, to deter imposters from receiving reset passwords. This system, however, has several drawbacks.

First, the supervisor has many tasks to perform in addition to handing out reset passwords, and diverting the attention of a supervisor from more pressing tasks is a relatively inefficient use of the supervisor's time, resulting in a cost to the organization in the supervisor's lost time.

Second, the supervisor may not be available at the moment the password is reset, and so the user must wait for the supervisor's availability to provide the password, delaying the implementation of the new password, and also resulting in a cost to the organization in unproductivity of the user awaiting the new password.

Third, there is an embarrassment factor for the user who has lost a password. Since the user must go directly to his or her supervisor to receive the new password, it may be uncomfortable for the user to seek the new password, and therefore delay seeking the replacement password incurring further lost productivity.

Fourth, by giving the user's password to the supervisor, security is compromised, since the supervisor now has access to the password. Some supervisors do not like to have access to their subordinate's passwords, to avoid any appearance of impropriety should any issue arise at a later date. To avoid this concern, some organizations employ a policy requiring the user, who just reset his or her password, to do so again from their computer through regular protocols not involving the supervisor. This yields still further lost time and loss in productivity.

Another system for resetting lost passwords requires having the user access the internet and then send an e-mail requesting the resetting of the lost password (after authentication). After authentication, the security operator sends an e-mail with the new password back to the user. This system has the drawbacks of requiring the user to have internet access even in the absence of the lost password, and also potential delay if the user's internet access is *via* a location which is remote from the computer for which the password must be reset. Additionally, most e-mail is sent unencrypted, so a full password sent this way is vulnerable to interception.

Still another system for resetting a password involves having the user contact the security operator to authenticate the need for the new password, and having the security operator mail (*via* "snail mail") the new password. This entails relatively lengthy delays, usually of a few days at least, and so is unacceptable for most organizations which require more immediate response to user's accessibility needs.

Yet another system for resetting lost passwords involves the use of "tokens", such as described in United States Patent No. 4,720,860, *i.e.,* the user has a security token, such as a unique serial number associated with a specific computer, which serves to authenticate the user as a party who is authorized to reset the password. This system has two glaring drawbacks, the first of which is cost, since such systems cost generally from $30-50 per year per person to administer, and the second is that if the user cannot access his or her regular password, the chances are good that the user also does not have access to the security token password, thereby defeating the entire system.

All of these prior art systems suffer from drawbacks of one kind or another pertaining to their implementation, security or practicality.

There is thus a need in the art for an improved password reset management system which provides for improved security and ease of implementation.

### SUMMARY OF THE INVENTION

Accordingly, there is provided an improved system for resetting lost passwords which overcomes the drawbacks of the prior art.

More specifically, there is provided a method and system for resetting lost passwords for individual stations in a computer network in which an authenticated request for resetting a password causes the generation of a new password which includes at least two discrete portions. A first portion is given immediately to the user, preferably by verbal announcement when the user requests the resetting of the password. A second portion is sent in parallel to the first portion to a location to which the user has secure access, such as a voice mailbox. Neither portion of the password is usable without the other, so that only once the user is in possession of both portions can the user employ the reset password.

According to another feature of the invention, an enhanced security system is provided in which access to a new password is governed by both a "What you know" protocol, such as providing a portion of the password upon receiving correct responses to one or more security questions, and a "What you have" protocol, by providing a second portion of the password to a location to which the legitimate user has access, such as a voice mailbox maintained by the organization which is employing the computer security system.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings:

Figure 1 is a block diagram showing the apparatus which makes up the inventive system which practices the inventive method.

Figure 2 is a flow chart showing the steps involved in the practice of the inventive method.

### DETAILED DESCRIPTION OF THE PRESENTLY PREFERRED EMBODIMENTS

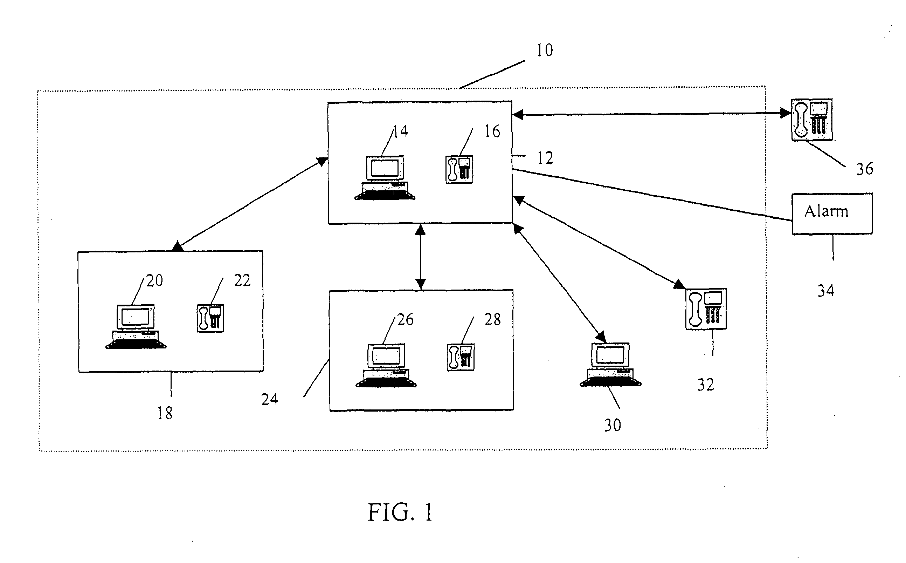

Figure 1 shows, generally at 10, a system for securely resetting lost passwords in accordance with the invention. System 10 includes a central office 12 which includes a central computer server 14 and a telephone 16. System 10 further includes at least a first client workstation 18 having its own computer 20 and telephone 22, and a second client workstation 24 having a computer 26 and a telephone 28. System 10 may also include a workstation 30 with no associated telephone, and a telephone 32 with no associated computer.

Computers 20, 26 and 30 are preferably part of a computer network maintained by an organization, such as a corporation, government agency or the like. Computers 20, 26 and 30 are password protected, with passwords known only to the authorized users thereof. It is these passwords which most likely become lost or forgotten, and it is for the resetting of these passwords that the invention is directed. Central computer server 14 has the ability to remotely reset the passwords for permitting access to computers 20, 26 and 30.

Telephones 16, 22, 28 and 32 are preferably part of the same internal phone system, so that access thereto is restricted to authorized members of the organization employing system 10, and it is also preferred that each of telephones 22, 28 and 32 have a voice mailbox associated therewith, each such voice mailbox having its own password associated therewith which is known only to the authorized user thereof. One or both of computer 14 and telephone 16 has the capacity to send a voice message to telephones 22, 28 and 32, even without the intervention of a human operator.

Telephone 16 of central office 12 may be answered by a human operator or may be answered automatically by computer 14 as a matter of design choice, although for purposes of handling lost password requests for a large number of client workstations, particularly on a "24/7" basis, it is preferred that all lost password requests be handled automatically.

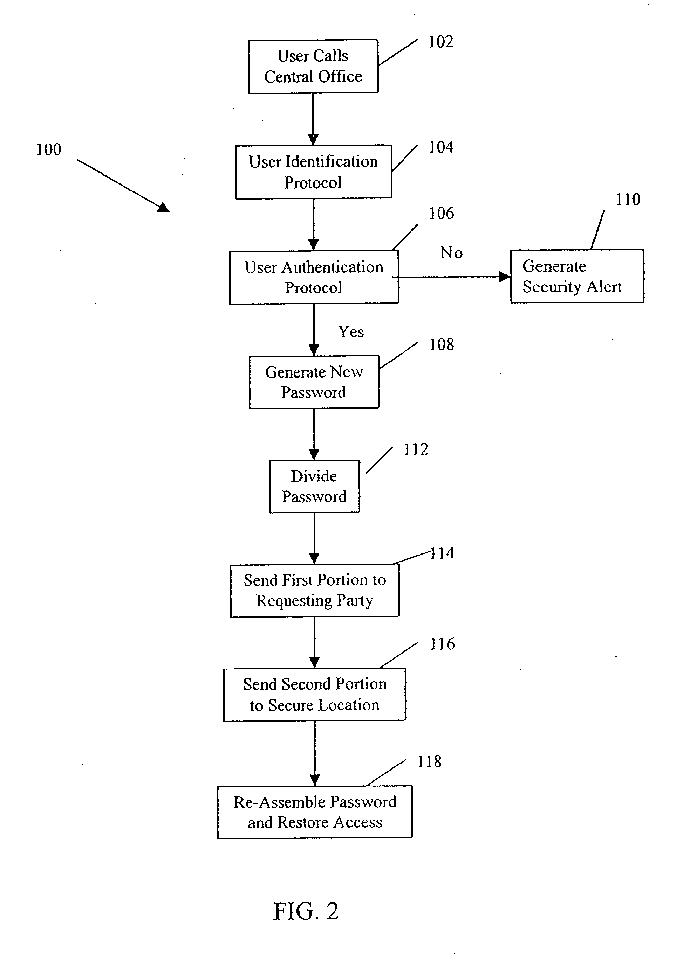

System 10 operates in accordance with the inventive method, shown conceptually as a flowchart in Fig. 2, generally at 100. According to method 100, once a user determines that his or her password is lost, and needs to be reset, the user initiates the practice of the inventive method.

For purposes of illustration, it is at first presumed that the user's workstation is workstation 18, and that the lost password is needed to operate computer 20. In accordance with usual practice, however, the user would have a different password (or personal identification number: "PIN") to access voice mail stored in a voice mailbox associated with telephone 22.

The first step in initiating method 100 is for the user who purports to be authorized to reset a specific password to contact central office 12 to request a lost password (step 102). This is ordinarily accomplished by having the user call telephone 16 of central office 12 through telephone 22 at workstation 18. The user calls the "Reset Password" number, and identifies (step 104) the computer for which a new password must be issued, for example by providing a name or employee ID number. If no human operator is involved, the information may be input either through a speech recognition protocol or through manual entry of the required information on the keypad of telephone 22 in known fashion.

Once central office 12 has been alerted to the request to reset the password of computer workstation, central office 12 initiates an authentication protocol (step 106) to authenticate the user as the user authorized to seek resetting of the password for computer 20. This may be done in any known fashion, such as outlined above, and usually involves interrogating the party requesting the resetting of the password with one or more security questions. The party seeking authentication then responds to the questions, either verbally or by inputting the correct answers to the telephone, such as through the keypad.

If the party is authenticated, then a new password is generated (step 108). If not, security may be alerted to the un-authenticated attempt to reset the password (step 110) (see, also, alarm 34 in Fig. 1).

If the party is authenticated, and the new password generated, the password is divided (step 112) into at least two portions. A first portion is substantially immediately (*i.e.* while the user is on the telephone or shortly thereafter) provided (step 114) to the user on the same device on which the user performs initial authentication. A second portion of the password is then sent also substantially immediately (step 116) to a different location to which the authorized user is known to have access. In the preferred embodiment, this is to the authorized user's voice mailbox associated with telephone 22. The authorized user, having the PIN necessary to access the voice mailbox, may then retrieve the second portion of the password, and then combine the two portions (step 118) to re-create the reset password and regain access to computer 20.

In this fashion, the password may be set without the need for human intervention, if desired, and provided more securely. For example, if the password is reset in this fashion, a hacker who could access the voice mailbox alone would not be able to gain access to the computer in the absence of the first portion of the password which is already in the sole possession of the authenticated user.

There are many alternative embodiments of the system, all within the ambit of the disclosure herein.

For example, it is possible that the password to be reset is not for the entire computer (e.g., it is just for one program or database on the computer), or that the user otherwise has access to another computer (e.g., computer 30) to access computer 14 to request the resetting of the password. In these cases, the request for resetting and the authentication step may be performed by computer, and even over the internet, rather than through a telephone connection. In this example, the first portion of the password may be displayed on the screen of computer 30, while the second portion is still transmitted to the voice mailbox of the user.

It is also possible that the user may have access to e-mail or text messaging (*e.g.,* through a PDA, such as a Blackberry®), so that the second portion of the reset password may be sent securely to that location instead of a voice mailbox.

In some circumstances, an authorized user may not have access to a voice mailbox or other secure location. In these circumstances, the second portion of the password may be sent to a supervisor instead (shown as telephone 36 in Fig. 1, although the password could as easily be sent electronically to an e-mail address for the supervisor). While this does not remove the embarrassment factor in retrieving the second portion of the password, or the lost time for the supervisor to participate in the process, the inventive method does address the more serious security concern: that the supervisor is not provided with the entire password, thereby alleviating any concerns that the supervisor may compromise the security of the newly reset password.

Alternatively, the second portion of the password could be sent to a phone at a predetermined time (e.g., two minutes after authentication), so that voice mail would not be required. The second portion could also be sent to the user's personal mobile telephone, which has the advantage of being a device which is not likely to be answered by someone other than the authorized user, and usually has voice mail if the authorized user does not answer it.

In some applications, it is possible that dividing the password into three or more portions may be desirable. For example, the password could be divided into one portion which is immediately provided to the authenticated user, a second portion which goes to the voice mailbox and a third portion which must be retrieved from a supervisor. The more portions of the password which must be retrieved separately, with different security protocols, the more secure the resetting process which may be effected. Each additional split, however, has a cost of additional lost time before the user may regain access to the computer and other costs which may make the process more expensive to the organization which implements it.

For this reason, it is preferred that only two portions be used, as it is believed that this affords a satisfactory level of protection for most organizations. In organizations which require greater security, however, the balancing of additional time and costs versus convenience is a mere matter of design choice, well within the capability of one of ordinary skill in the art to balance.

It should also be noted that referring to one portion of the password as the "first" portion is completely arbitrary, and does not imply that it is the portion of the password which must be entered first in time compared to the remainder of the password. Any portion of the password may be the first portion entered, so long as the user is advised which portion that is.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for resetting passwords comprising:
receiving a request from a purported user to reset a password;
authenticating said purported user as an actual user;
establishing a new password;
dividing said new password into at least first and second portions;
transmitting said first portion of said new password to said actual user; and
transmitting said second portion of said new password to a location having restricted access;
whereby said actual user has access to said location and is enabled to retrieve both said first and second portions of said new password, and thereby may recreate said new password securely.

2. The method of claim 1, wherein said location is a voice mailbox to which said actual user has access.

3. The method of claim 1, wherein said location is in the control of an individual known to said actual user.

4. The method of claim 3, wherein said individual is a supervisor of said actual user.

5. The method of claim 1, wherein said first portion of said new password is transmitted substantially immediately after said new password is divided.

6. The method of claim 1, wherein said new password is divided into at least a third portion in addition to said first and second portions, and said third portion is transmitted to a second location for retrieval by said actual user.

7. A system for resetting passwords, comprising:
means for receiving a request from a purported user to reset a password;
means for authenticating said purported user as an actual user;
means for establishing a new password;
means for dividing said new password into at least first and second portions;
first means for transmitting said first portion of said new password to said actual user; and
second means for transmitting said second portion of said new password to a secure location;
whereby said actual user has access to said secure location and is able to retrieve said second portion of said new password and thereby utilize said new password.

8. The system of claim 7, wherein said means for receiving said request includes a first telephone communication.

9. The system of claim 8, wherein said first means for transmitting includes a second telephone communication.

10. The system of claim 9, wherein said second telephone communication is made substantially immediately after said first telephone communication over the same equipment used to deliver said first telephone communication.

11. The system of claim 7, wherein said means for receiving includes an e-mail communication.

12. The system of claim 7, wherein said first means for transmitting includes a telephone communication.

13. The system of claim 7, wherein said secure location is a voice mailbox.

14. The system of claim 7, wherein said secure location is a telephone to which said actual user is known to have access.

15. The system of claim 7, wherein said first means for transmitting and said second means for transmitting are different.

16. The system of claim 7, wherein said means for dividing divides said new password into a third portion; and
further comprising third means for transmitting said third portion of said new password to a second secure location.

17. The system of claim 16, wherein said actual user is required to follow a first security protocol to secure said second portion of said new password from said secure location and a second security protocol to retrieve said third portion of said new password from said second secure location.

18. The system of claim 17, wherein said first and second protocols are different.

19. The system of claim 17, wherein at least one of said first and second protocols includes an in-person identification of said actual user.

20. The system of claim 7, wherein said user's access to said secure location is provided by a password different from said reset password.
